# EUROPEAN PATENT APPLICATION

(11) **EP 4 478 462 A1**
(43) Date of publication of application: **18.12.2024**
(21) Application number: 23780762.3
(22) Date of filing: 29.03.2023
(51) Int. Cl.: H01M 8/0271, C25B 9/60, C25B 9/63, H01M 8/0206, H01M 8/0282, H01M 8/04, H01M 8/12, H01M 8/1226, H01M 8/2475

(54) **ELECTROCHEMICAL CELL, ELECTROCHEMICAL CELL DEVICE, MODULE, AND MODULE ACCOMMODATING DEVICE**

(30) Priority: 31.03.2022 JP 2022060438
(71) Applicant: Kyocera Corporation, Kyoto-shi, Kyoto 612-8501 (JP)
(72) Inventor: IMANAKA, Kazuya, Kyoto-shi, Kyoto 612-8501 (JP)
(74) Representative: Viering, Jentschura & Partner mbB Patent- und Rechtsanwälte
(86) International application number: PCT/JP2023/012970
(87) International publication number: WO 2023/190754

(57) **Abstract**

An electrochemical cell includes a porous portion, a metal member, a sealing material, and an intermediate material. The porous portion is electrically conductive. The metal member contains chromium. The sealing material is located on the porous portion and on the metal member. The intermediate material is located between the metal member and the sealing material. The intermediate material includes two or more portions having different surface roughnesses or different thicknesses at different positions.

## Description

### TECHNICAL FIELD

The present disclosure relates to an electrochemical cell, an electrochemical cell device, a module, and a module housing device.

### BACKGROUND OF INVENTION

In recent years, various fuel cell stack devices each including a plurality of fuel cells have been proposed, as next-generation energy. A fuel cell is a type of electrochemical cell capable of obtaining electrical power by using a fuel gas such as a hydrogen-containing gas and an oxygen-containing gas such as air.

### CITATION LIST

### PATENT LITERATURE

Patent Document 1: JP 2015-162357 A

### SUMMARY

An electrochemical cell according to an aspect of an embodiment includes a porous portion, a metal member, a sealing material, and an intermediate material. The porous portion is electrically conductive. The metal member contains chromium. The sealing material is located on the porous portion and on the metal member. The intermediate material is located between the metal member and the sealing material. The intermediate material includes two or more portions having different surface roughnesses or different thicknesses at different positions.

An electrochemical cell according to an aspect of an embodiment includes a porous portion, a metal member, a sealing material, and an intermediate material. The porous portion is electrically conductive. The metal member contains chromium. The sealing material is located on the porous portion and on the metal member. The intermediate material is located between the metal member and the sealing material. A surface roughness of a first interface of the intermediate material facing the sealing material is different from a surface roughness of a second interface of the intermediate material facing the metal member.

An electrochemical cell according to an aspect of an embodiment includes a porous portion, a metal member, a sealing material, and an intermediate material. The porous portion is electrically conductive. The metal member contains chromium. The sealing material is located on the porous portion and on the metal member. The intermediate material is located between the metal member and the sealing material. At least one element selected from the group consisting of Mn, Ti, Ca, and Al is in a boundary portion between the metal member and the intermediate material. A first content rate that is a sum of content rates of Mn, Ti, Ca, and Al in the boundary portion is different from a second content rate that is a sum of content rates of Mn, Ti, Ca, and Al inside the metal member or inside the intermediate material.

An electrochemical cell device of the present disclosure includes a cell stack including the electrochemical cell described above.

A module of the present disclosure includes the electrochemical cell device described above and a container housing the electrochemical cell device.

A module housing device of the present disclosure includes the module described above, an auxiliary device configured to operate the module, and an external case housing the module and the auxiliary device.

### BRIEF DESCRIPTION OF THE DRAWINGS

FIG. 1A is a horizontal cross-sectional view illustrating an example of an electrochemical cell according to a first embodiment.
FIG. 1B is a side view of an example of the electrochemical cell according to the first embodiment when viewed from the side of an air electrode.
FIG. 1C is a side view of an example of the electrochemical cell according to the first embodiment when viewed from the side of an interconnector.
FIG. 1D is a horizontal cross-sectional view illustrating another example of the electrochemical cell according to the first embodiment.
FIG. 2A is a perspective view illustrating an example of a cell stack device according to the first embodiment.
FIG. 2B is a cross-sectional view taken along a line X-X illustrated in FIG. 2A.
FIG. 2C is a top view illustrating the example of the cell stack device according to the first embodiment.
FIG. 3A is an enlarged cross-sectional view of a region A illustrated in FIG. 1A.
FIG. 3B is an enlarged cross-sectional view of the region A illustrated in FIG. 1A.
FIG. 3C is an enlarged cross-sectional view of the region A illustrated in FIG. 1A.
FIG. 3D is an enlarged cross-sectional view of the region A illustrated in FIG. 1A.
FIG. 3E is an enlarged cross-sectional view of the region A illustrated in FIG. 1A.
FIG. 3F is an enlarged cross-sectional view of the region A illustrated in FIG. 1A.
FIG. 3G is an enlarged cross-sectional view of the region A illustrated in FIG. 1A.
FIG. 3H is an enlarged cross-sectional view of the region A illustrated in FIG. 1A.
FIG. 3I is an enlarged cross-sectional view of the region A illustrated in FIG. 1A.
FIG. 3J is an enlarged cross-sectional view of the region A illustrated in FIG. 1A.
FIG. 3K is an enlarged cross-sectional view of a region B illustrated in FIG. 1D.
FIG. 3L is an enlarged cross-sectional view of the region B illustrated in FIG. 1D.
FIG. 3M is an enlarged cross-sectional view of the region B illustrated in FIG. 1D.
FIG. 3N is an enlarged cross-sectional view of the region B illustrated in FIG. 1D.
FIG. 3O is an enlarged cross-sectional view of the region B illustrated in FIG. 1D.
FIG. 3P is an enlarged cross-sectional view of the region B illustrated in FIG. 1D.
FIG. 3Q is an enlarged cross-sectional view of the region B illustrated in FIG. 1D.
FIG. 3R is an enlarged cross-sectional view of the region B illustrated in FIG. 1D.
FIG. 3S is an enlarged cross-sectional view of the region B illustrated in FIG. 1D.
FIG. 3T is an enlarged cross-sectional view of the region B illustrated in FIG. 1D.
FIG. 3U is an enlarged cross-sectional view of the region B illustrated in FIG. 1D.
FIG. 3V is an enlarged cross-sectional view of the region B illustrated in FIG. 1D.
FIG. 3W is an enlarged cross-sectional view of the region B illustrated in FIG. 1D.
FIG. 3X is an enlarged cross-sectional view of the region B illustrated in FIG. 1D.
FIG. 3Y is an enlarged cross-sectional view of the region B illustrated in FIG. 1D.
FIG. 4 is a cross-sectional view illustrating another example of the electrochemical cell according to the first embodiment.
FIG. 5 is a cross-sectional view illustrating another example of the electrochemical cell according to the first embodiment.
FIG. 6 is a cross-sectional view illustrating another example of the electrochemical cell according to the first embodiment.
FIG. 7 is an exterior perspective view illustrating an example of a module according to the first embodiment.
FIG. 8 is an exploded perspective view schematically illustrating an example of a module housing device according to the first embodiment.
FIG. 9 is a cross-sectional view illustrating an example of an electrochemical cell according to a second embodiment.
FIG. 10 is an enlarged cross-sectional view of a region C illustrated in FIG. 9.
FIG. 11 is a cross-sectional view illustrating another example of the electrochemical cell according to the second embodiment.
FIG. 12 is a cross-sectional view illustrating another example of the electrochemical cell according to the second embodiment.
FIG. 13 is a cross-sectional view illustrating another example of the electrochemical cell according to the second embodiment.

### DESCRIPTION OF EMBODIMENTS

The fuel cell stack device includes, for example, a metal member configured to support a plurality of fuel cells. In such a structure, there is room for improvement in durability of a bonding portion that fixes the metal member and seals a gas.

Thus, an electrochemical cell, an electrochemical cell device, a module, and a module housing device each having high durability are expected to be provided.

Embodiments of an electrochemical cell, an electrochemical cell device, a module and a module housing device disclosed in the present application will now be described in detail with reference to the accompanying drawings. Note that the disclosure is not limited by the following embodiments.

Note that the drawings are schematic and that the dimensional relationships between elements, the proportions of the elements, and the like may differ from the actual ones. There may be differences between the drawings in the dimensional relationships, proportions, and the like.

### First Embodiment

### Configuration of Cell

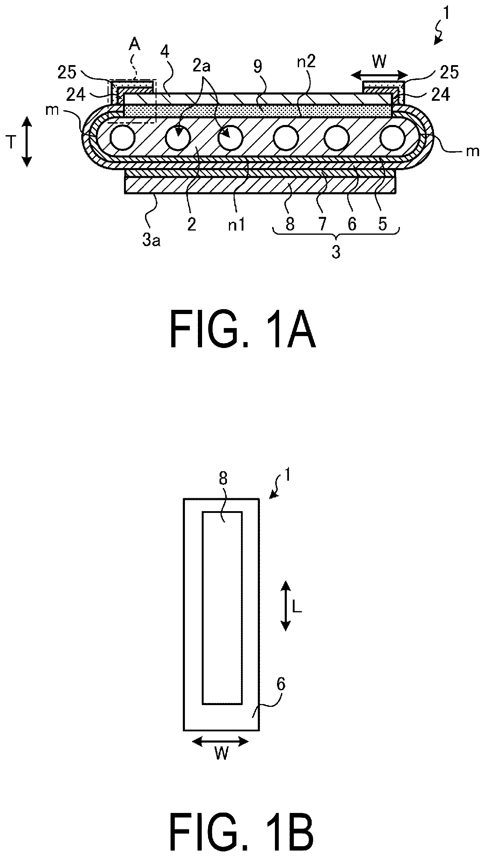

First, with reference to FIGs. 1A to 1C, an example of a solid oxide fuel cell will be described as an electrochemical cell according to a first embodiment. The electrochemical cell device may include a cell stack including a plurality of the electrochemical cells. The electrochemical cell device including the plurality of electrochemical cells is simply referred to as a cell stack device.

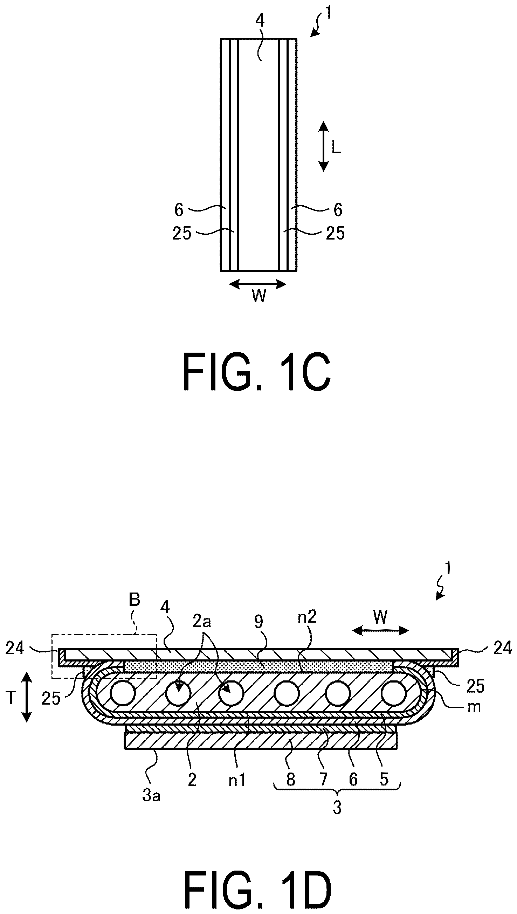

FIG. 1A is a horizontal cross-sectional view illustrating an example of an electrochemical cell according to the first embodiment, FIG. 1B is a side view of an example of the electrochemical cell according to the first embodiment when viewed from an air electrode side, and FIG. 1C is a side view of an example of the electrochemical cell according to the first embodiment when viewed from an interconnector side. Note that FIGs. 1A to 1C illustrate enlarged views each illustrating part of a configuration of the electrochemical cell. Hereinafter, the electrochemical cell may be simply referred to as a cell.

In the example illustrated in FIGs. 1A to 1C, a cell 1 is of a hollow flat plate type, and has an elongated plate shape. As illustrated in FIG. 1B, the overall shape of the cell 1 when viewed from the side is, for example, a rectangle having a side length of from 5 cm to 50 cm in a length direction L and a length of from 1 cm to 10 cm in a width direction W orthogonal to the length direction L. The thickness in a thickness direction T of the entire cell 1 is, for example, from 1 mm to 5 mm.

As illustrated in FIG. 1A, the cell 1 includes a support substrate 2, an element portion 3, an interconnector 4, an adhesive 9, an intermediate material 24, and a sealing material 25. The support substrate 2 has a pillar shape with a pair of flat surfaces n1 and n2 facing each other and a pair of side surfaces m in a circular arc shape connecting the flat surfaces n1 and n2.

The element portion 3 is located on the flat surface n1 of the support substrate 2. The element portion 3 includes a fuel electrode 5, a solid electrolyte layer 6, and an air electrode 8. In the example illustrated in FIG. 1A, the interconnector 4 is located on the flat surface n2 of the cell 1. Note that the cell 1 may include an intermediate layer 7 between the solid electrolyte layer 6 and the air electrode 8.

As illustrated in FIG. 1B, the air electrode 8 extends neither to an upper end nor to a lower end of the cell 1. At a lower end portion of the cell 1, only the solid electrolyte layer 6 is exposed to the surface. As illustrated in FIG. 1C, the interconnector 4 may extend to the lower end of the cell 1. At the lower end portion of the cell 1, the interconnector 4 and the solid electrolyte layer 6 are exposed on the surface. Both end portions of the interconnector 4 in the width direction W are gas-sealed by the sealing material 25. Note that, as illustrated in FIG. 1A, the solid electrolyte layer 6 is exposed at the surface at the pair of side surfaces m in a circular arc shape of the cell 1. The interconnector 4 need not extend to the lower end of the cell 1.

Hereinafter, each of constituent members constituting the cell 1 will be described.

The support substrate 2 includes gas-flow passages 2a, inside which gas flows. The example of the support substrate 2 illustrated in FIG. 1A includes six gas-flow passages 2a. The support substrate 2 has gas permeability and allows a fuel gas flowing through the gas-flow passages 2a to permeate to the fuel electrode 5. The support substrate 2 is electrically conductive. The electrically conductive support substrate 2 collects electricity generated in the element portion 3 to the interconnector 4.

The material of the support substrate 2 includes, for example, an iron group metal component and an inorganic oxide. The iron group metal component may be, for example, Ni (nickel) and/or NiO. The inorganic oxide may be, for example, a specific rare earth element oxide. The rare earth element oxide may include Y, for example.

As the material of the fuel electrode 5, a commonly known material may be used. The fuel electrode 5 may use a porous electrically conductive ceramic, for example, a ceramic containing an ion conductive material such as ZrO₂ in which a rare earth element oxide is in solid solution, and also containing Ni and/or NiO. The above rare earth element oxide contains a plurality of rare earth elements selected from, for example, Sc, Y, La, Nd, Sm, Gd, Dy, and Yb. Hereinafter, ZrO₂ in which a rare earth element oxide is in solid solution may be referred to as stabilized zirconia. Stabilized zirconia also includes partially stabilized zirconia.

The solid electrolyte layer 6 is an electrolyte and delivers ions between the fuel electrode 5 and the air electrode 8. At the same time, the solid electrolyte layer 6 has gas blocking properties, and makes leakage of the fuel gas and the oxygen-containing gas less likely to occur. At the same time, the solid electrolyte layer 6 has gas blocking properties, and makes leakage of the fuel gas and the oxygen-containing gas less likely to occur.

The material of the solid electrolyte layer 6 may be, for example, an ion conductive material such as ZrO₂ in which, for example, a 3-mole% to 15-mole% rare earth element oxide is in solid solution. The rare earth element oxide may contain, for example, one or more rare earth elements selected from Sc, Y, La, Nd, Sm, Gd, Dy, and Yb. The solid electrolyte layer 6 may contain, for example, ZrO₂ in which Yb, Sc, or Gd is in solid solution, CeO₂ in which La, Nd, or Yb is in solid solution, BaZrO₃ in which Sc or Yb is in solid solution, or BaCeO₃ in which Sc or Yb is in solid solution.

The air electrode 8 has gas permeability. The open porosity (porosity) of the air electrode 8 may be, for example, in the range of from 20% to 50%, particularly from 30% to 50%.

The material of the air electrode 8 is not particularly limited, as long as the material is one generally used for the air electrode. The material of the air electrode 8 may be, for example, an electrically conductive ceramic such as a so-called ABO₃ type perovskite oxide.

The material of the air electrode 8 may be, for example, a composite oxide in which Sr (strontium) and La (lanthanum) coexist at the A site. Examples of such a composite oxide include LaₓSr₁₋ₓCo_{y}Fe_{1-y}O₃, LaₓSr₁₋ₓMnO₃, LaₓSr₁₋ₓFeO₃, and LaₓSr₁₋ₓCoO₃. Here, x is 0 < x < 1, and y is 0 < y < 1.

When the element portion 3 includes the intermediate layer 7, the intermediate layer 7 functions as a diffusion suppression layer. The intermediate layer 7 makes Sr (strontium) contained in the air electrode 8 less likely to diffuse into the solid electrolyte layer 6 containing, for example, Zr, thereby making a resistive layer of SrZrOs less likely to be formed in the solid electrolyte layer 6.

The material of the intermediate layer 7 is not particularly limited thereto as long as the material is not likely to cause the diffusion of elements between the air electrode 8 and the solid electrolyte layer 6 in general. The material of the intermediate layer 7 may contain, for example, CeO₂ (cerium oxide) in which rare earth elements other than Ce (cerium) are in solid solution. As such rare earth elements, for example, Gd (gadolinium), Sm (samarium), or the like may be used.

The interconnector 4 is a dense metal member and hardly causes leakage of a fuel gas flowing through the gas-flow passages 2a inside the support substrate 2 and an oxygen-containing gas flowing outside the support substrate 2. The interconnector 4 is fixed to the support substrate 2 including the gas-flow passages 2a with the adhesive 9.

The interconnector 4 contains chromium. The interconnector 4 is made of, for example, stainless steel. The interconnector 4 may be made of, for example, stainless steel such as ferrite-based stainless steel or austenite-based stainless steel having high thermal resistance. The interconnector 4 may be made of, for example, a nickel-chromium based alloy or an iron-chromium-based alloy. The interconnector 4 may contain, for example, a metal oxide. The above-discussed interconnector 4 is an example of a metal member.

The adhesive 9 is located between the interconnector 4 and the support substrate 2. The adhesive 9 has electrical conductivity. The adhesive 9 may have gas permeability.

The adhesive 9 may contain, for example, electrically conductive particles of Ni. The adhesive 9 may contain an inorganic oxide such as TiO₂, a rare earth element oxide (Y₂O₃, CeO₂, or the like), or a transition metal oxide (Fe₂O₃, CuO, or the like).

The sealing material 25 is located on an end surface of the interconnector 4. The sealing material 25 is located to straddle the interconnector 4 and the solid electrolyte layer 6 and seals the flow of the fuel gas between the fuel electrode 5 and adhesive 9 and the outside.

The sealing material 25 is electrically insulative. Hereinafter, being electrically insulative may be simply referred to as being insulative. As the sealing material 25, for example, an oxide having low electrical conductivity such as glass can be used. The material of the sealing material 25 may be, for example, amorphous glass or crystallized glass. As the crystallized glass, for example, any one selected from the group consisting of SiO₂-CaO-based, MgO-B₂O₃-based, La₂O₃-B₂O₃-MgO-based, La₂O₃-B₂O₃-ZnO-based, and SiO₂-CaO-ZnO-based materials may be used, or, in particular, a SiO₂-MgO-based material may be used.

The intermediate material 24 is located between the interconnector 4 and the sealing material 25. The intermediate material 24 may contain an insulative oxide having higher thermal resistance than the sealing material 25, such as forsterite. As a result, the intermediate material 24 increases adhesiveness between the sealing material 25 and the interconnector 4, thereby making it possible to enhance the durability of the cell 1. The insulative oxide may have an electrical resistivity of, for example, 1 × 10¹⁰ Ω·m or more at room temperature. Since the intermediate material 24 is less likely to be dissolved and less likely to have components evaporate in high-temperature water vapor than the sealing material 25, gas leakage and a decrease in electrode performance are less likely to occur. The intermediate material 24 contains an oxide that hardly causes desorption of chromium contained in the interconnector 4 into an oxidizing atmosphere.

FIG. 1D is a horizontal cross-sectional view illustrating another example of the electrochemical cell according to the first embodiment. In the example illustrated in FIG. 1D, unlike the example illustrated in FIG. 1A, the length of the interconnector 4 in the width direction W is larger than the length of the cell 1 in the width direction W. In the example illustrated in FIG. 1D, the configuration of the example illustrated in FIG. 1A is applied except for the above-mentioned point.

### Configuration of Cell Stack Device

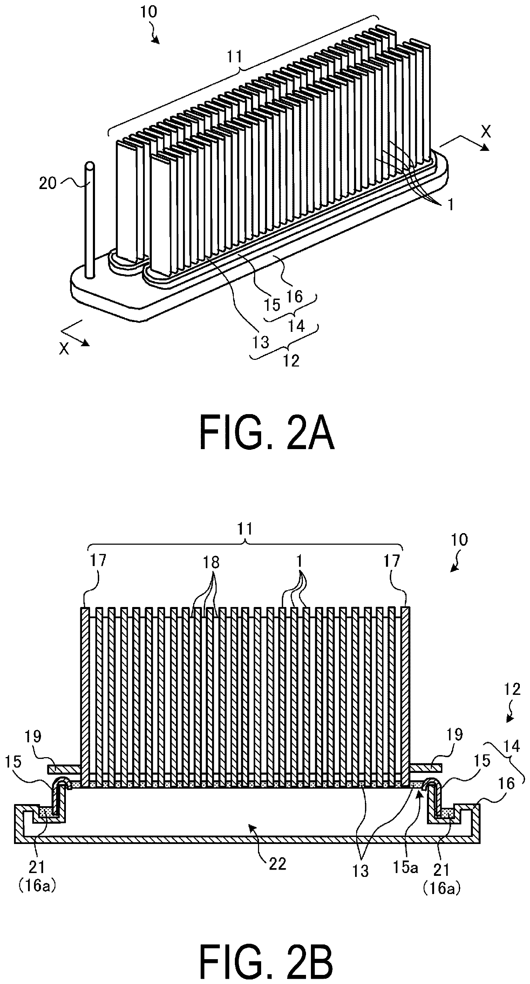

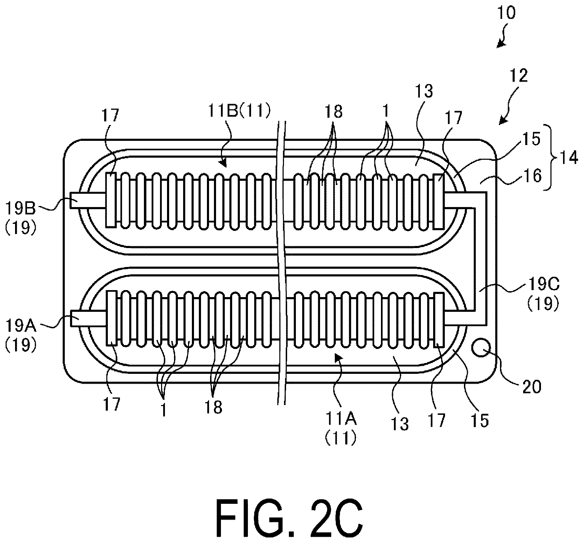

A cell stack device according to the present embodiment using the cell 1 described above will be described with reference to FIGs. 2A to 2C. FIG. 2A is a perspective view illustrating an example of a cell stack device according to the embodiment. FIG. 2B is a cross-sectional view taken along a line X-X illustrated in FIG. 2A. FIG. 2C is a top view illustrating an example of a cell stack device according to the embodiment.

As illustrated in FIG. 2A, a cell stack device 10 includes a cell stack 11 including a plurality of the cells 1 arrayed (stacked) in the thickness direction T (see FIG. 1A) of each cell 1, and a fixing member 12.

The fixing member 12 includes a fixing material 13 and a support member 14. The support member 14 supports the cells 1. The fixing material 13 fixes the cells 1 to the support member 14. The support member 14 includes a support body 15 and a gas tank 16. The support body 15 and the gas tank 16, constituting the support member 14, are made of a metal and are electrically conductive.

As illustrated in FIG. 2B, the support body 15 includes an insertion hole 15a, into which the lower end portions of the plurality of cells 1 are inserted. The lower end portions of the plurality of cells 1 and the inner wall of the insertion hole 15a are bonded by the fixing material 13.

The gas tank 16 includes an opening portion through which a reactive gas is supplied to the plurality of cells 1 via the insertion hole 15a, and a recessed groove 16a located in the periphery of the opening portion. The outer peripheral end portion of the support body 15 is bonded to the gas tank 16 by a bonding material 21, with which the recessed groove 16a of the gas tank 16 is filled.

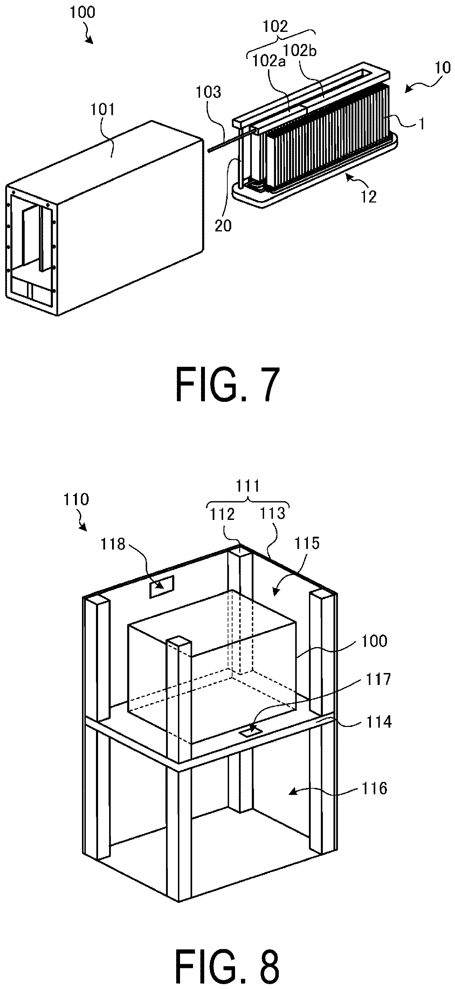

In the example illustrated in FIG. 2A, the fuel gas is stored in an internal space 22 formed by the support body 15 and the gas tank 16. The support body 15 and the gas tank 16 constitute the support member 14. The gas tank 16 includes a gas circulation pipe 20 connected thereto. The fuel gas is supplied to the gas tank 16 through the gas circulation pipe 20 and is supplied from the gas tank 16 to the gas-flow passages 2a (see FIG. 1A) inside the cells 1. The fuel gas supplied to the gas tank 16 is generated by a reformer 102 (see FIG. 7) to be described later.

A hydrogen-rich fuel gas can be produced, for example, by steam-reforming a raw fuel. When the fuel gas is produced by steam reforming, the fuel gas contains steam.

In the example illustrated in FIG. 2A, two rows of the cell stacks 11, two of the support bodies 15, and the gas tank 16 are provided. The two rows of the cell stacks 11 each have the plurality of cells 1. Each of the cell stacks 11 is fixed to a corresponding one of the support bodies 15. An upper surface of the gas tank 16 includes two through holes. Each of the support bodies 15 is disposed in a corresponding one of the through holes. The internal space 22 is formed by the one gas tank 16 and the two support bodies 15.

The insertion hole 15a has, for example, an oval shape in a top surface view. The length of the insertion hole 15a in an arrangement direction of the cells 1, that is, the thickness direction T, is longer than the distance between two end current collection members 17 located at two ends of the cell stack 11, for example. The width of the insertion hole 15a is, for example, greater than the length of the cell 1 in the width direction W (see FIG. 1A).

As illustrated in FIG. 2B, a bonding portion between the inner wall of the insertion hole 15a and the lower end portion of each of the cells 1 is filled with the fixing material 13 and solidified. As a result, the inner wall of the insertion hole 15a and the lower end portions of the plurality of cells 1 are bonded and fixed, and the lower end portions of the cells 1 are bonded and fixed to each other. The gas-flow passages 2a of each of the cells 1 communicate, at the lower end portion, with the internal space 22 of the support member 14.

The fixing material 13 and the bonding material 21 may be of low electrical conductivity, such as glass. As the specific materials of the fixing material 13 and the bonding material 21, amorphous glass or the like may be used, and especially, crystallized glass or the like may be used.

As the crystallized glass, for example, any one selected from the group consisting of SiO₂-CaO-based, MgO-B₂O₃-based, La₂O₃-B₂O₃-MgO-based, La₂O₃-B₂O₃-ZnO-based, and SiO₂-CaO-ZnO-based materials may be used, or, in particular, a SiO₂-MgO-based material may be used.

As illustrated in FIG. 2B, electrically conductive members 18 are each interposed between adjacent ones of the cells 1 of the plurality of cells 1. Each of the electrically conductive members 18 electrically connects in series one of the adjacent ones of the cells 1 to another one of the adjacent ones of the cells 1. More specifically, the electrically conductive member 18 connects the fuel electrode 5 of one of the cells 1 with the air electrode 8 of another one of the cells 1.

As illustrated in FIG. 2B, the end current collection members 17 are electrically connected to the cells 1 located at the outermost sides in the arrangement direction of the plurality of cells 1. The end current collection members 17 are each connected to an electrically conductive portion 19 protruding outward from the cell stack 11. The electrically conductive portion 19 collects electricity generated by the cells 1 and conducts the electricity to the outside. Note that in FIG. 2A, the end current collection members 17 are not illustrated.

As illustrated in FIG. 2C, the cell stack device 10 may be a single battery in which two cell stacks 11A and 11B are connected in series. In this case, the electrically conductive portion 19 of the cell stack device 10 may include a positive electrode terminal 19A, a negative electrode terminal 19B, and a connection terminal 19C.

The positive electrode terminal 19A functions as a positive electrode when the electrical power generated by the cell stack 11 is output to the outside and is electrically connected to the end current collection member 17 on a positive electrode side in the cell stack 11A. The negative electrode terminal 19B functions as a negative electrode when the electrical power generated by the cell stack 11 is output to the outside and is electrically connected to the end current collection member 17 on a negative electrode side in the cell stack 11B.

The connection terminal 19C electrically connects the end current collection member 17 on the negative electrode side in the cell stack 11A and the end current collection member 17 on the positive electrode side in the cell stack 11B.

### Bonding between Metal Member and Sealing Material

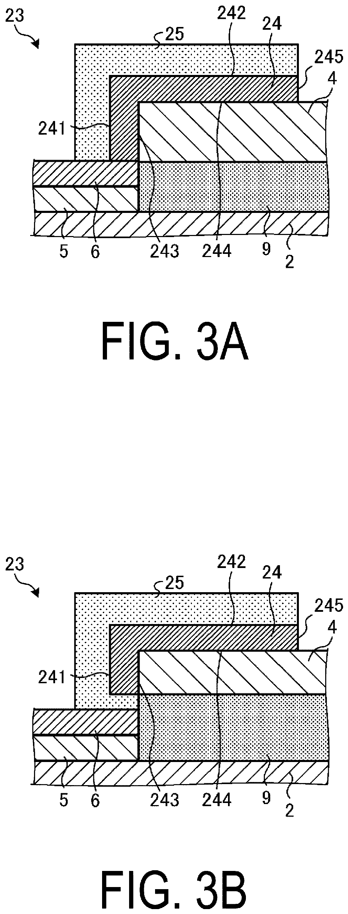

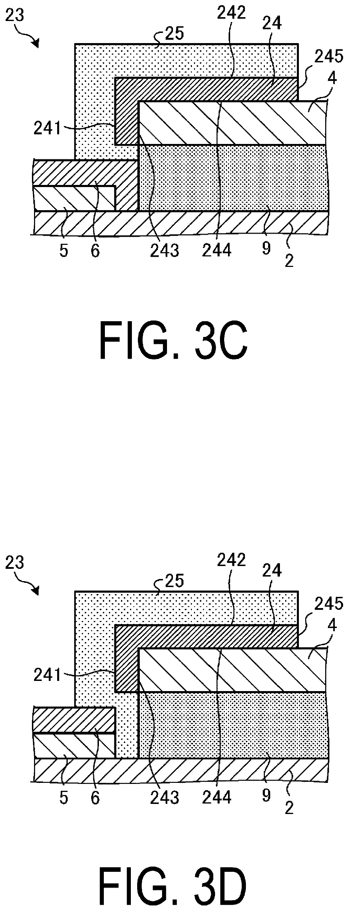

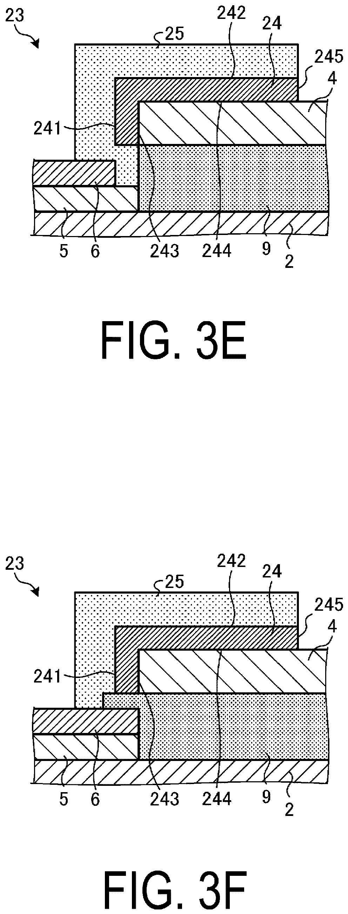

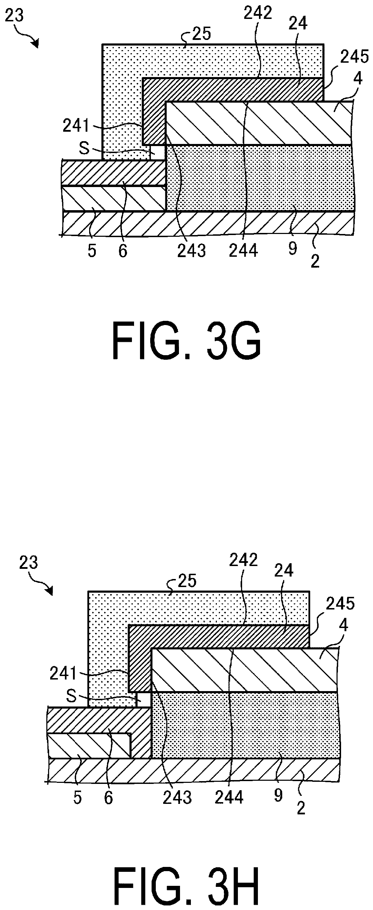

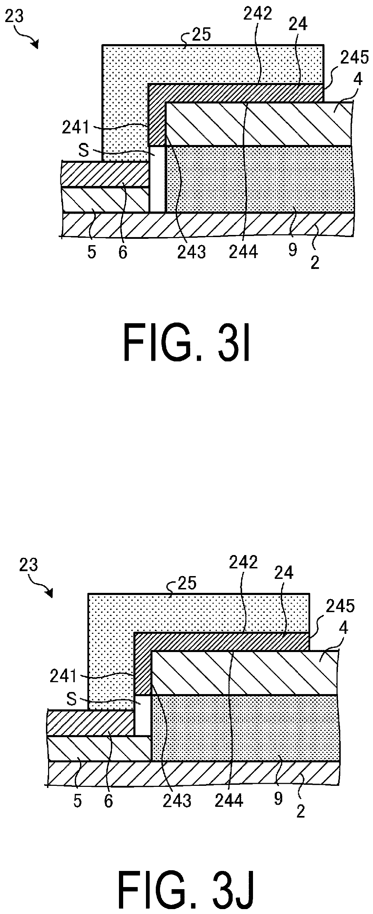

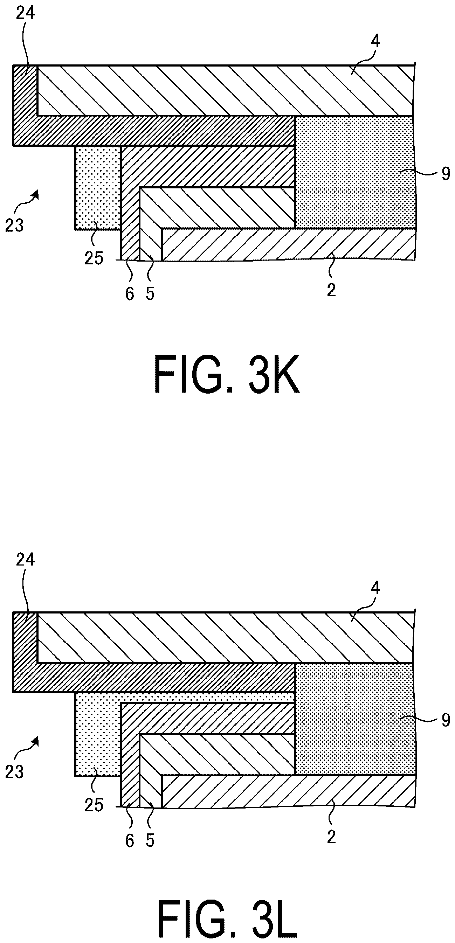

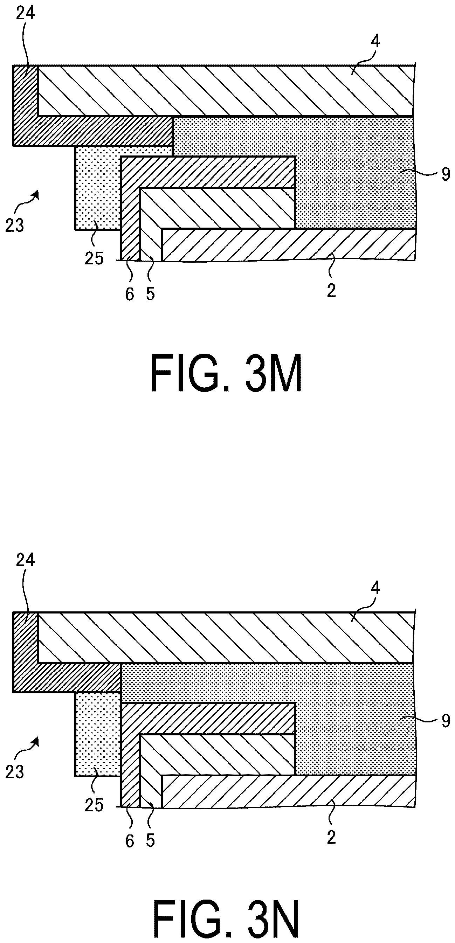

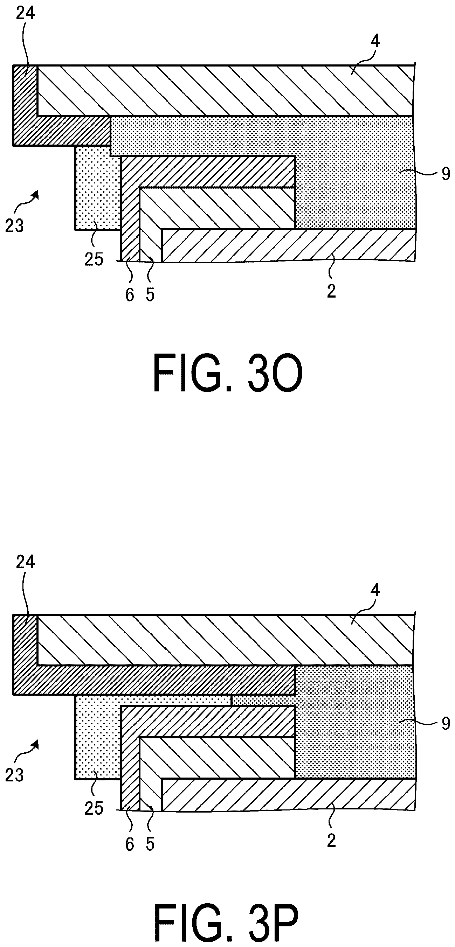

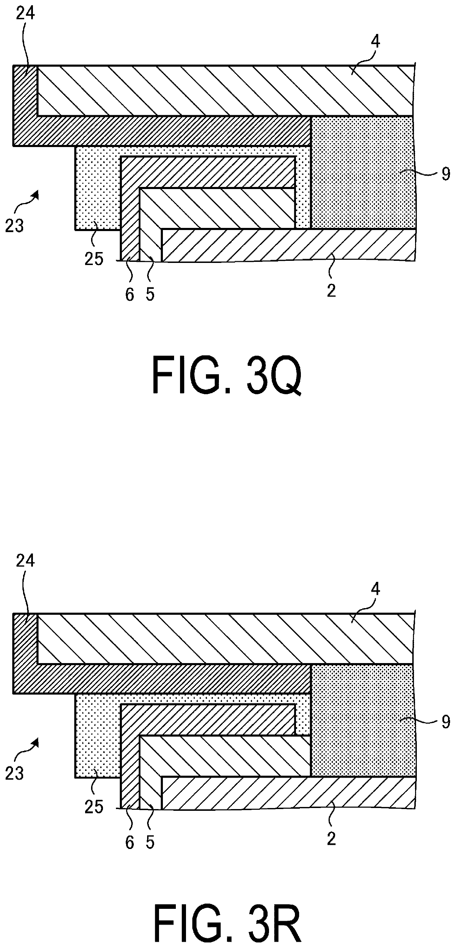

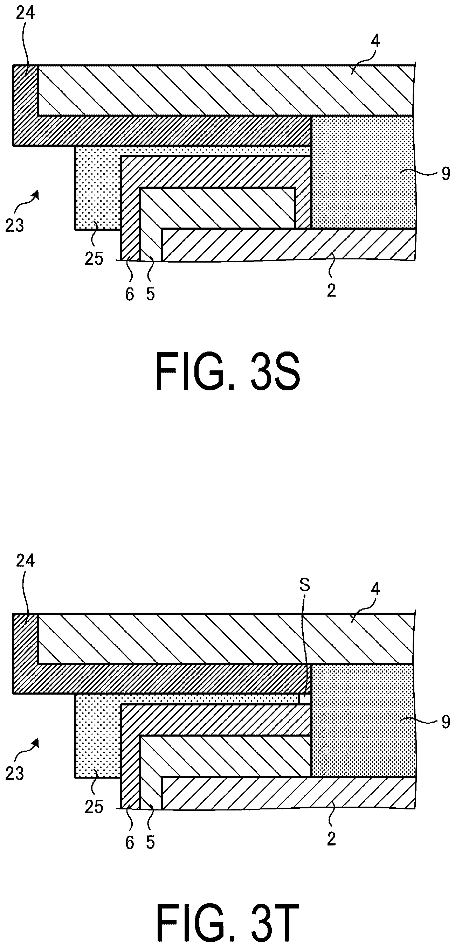

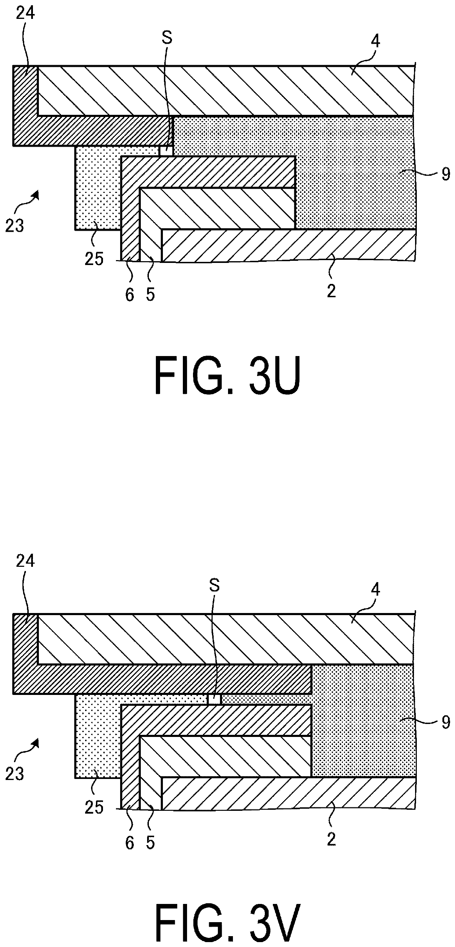

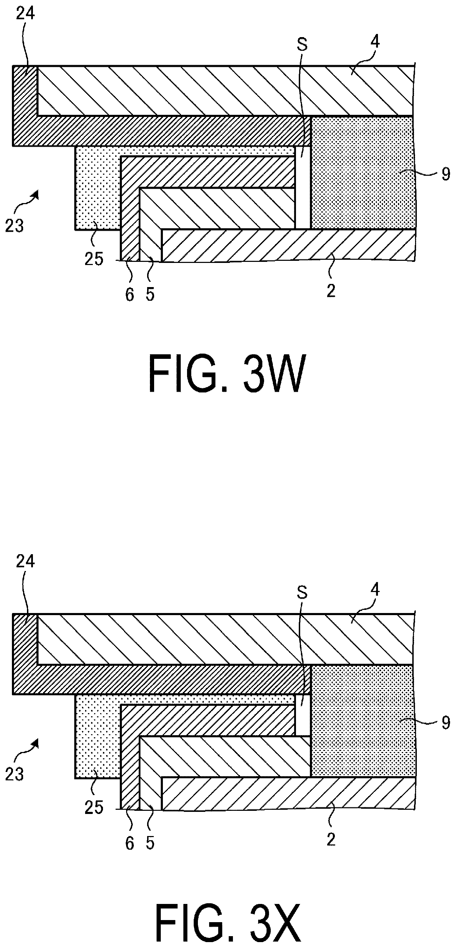

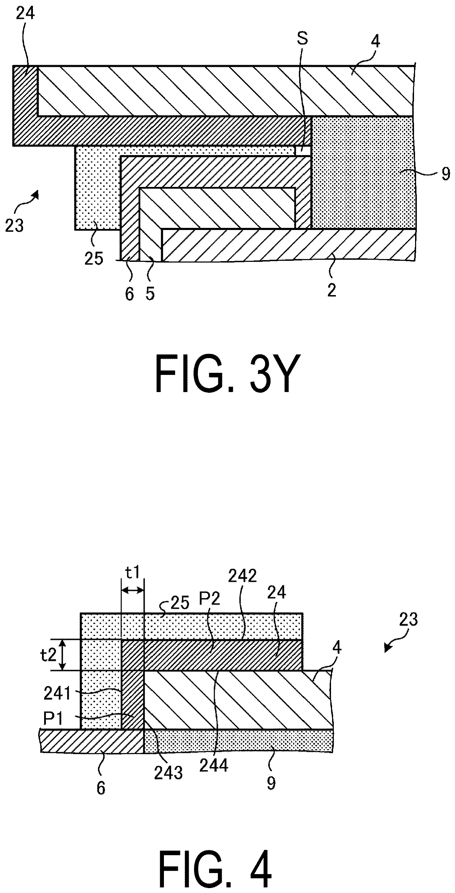

Next, bonding between the interconnector 4 and the sealing material 25 will be described with reference to FIGs. 3A to 3Y. FIGs. 3A to 3J are each an enlarged cross-sectional view of a region A illustrated in FIG. 1A, and FIGs. 3K to 3Y are each an enlarged cross-sectional view of a region B illustrated in FIG. 1D.

As illustrated in FIG. 3A, the sealing material 25 is bonded to the interconnector 4 with the intermediate material 24 interposed therebetween.

The intermediate material 24 has surfaces 241 and 242 in contact with the sealing material 25 and surfaces 243 and 244 in contact with the interconnector 4. The intermediate material 24 has a surface 245 exposed to an external space 23. The surfaces 242 and 244 are located along the width direction W depicted in FIG. 1A, and the surfaces 241 and 243 are located along the thickness direction T depicted in FIG. 1A. The external space 23 is a space to which the air electrode 8 of the cell 1 (see FIG. 1A) is exposed and is filled with an oxygen-containing gas such as air. In other words, the external space 23 is an oxidizing atmosphere.

As described above, the interconnector 4 contains chromium. For example, when chromium contained in the interconnector 4 is desorbed into the oxidizing atmosphere (external space 23), the durability of the interconnector 4 may be lowered.

Thus, in the present embodiment, the surface roughness of the intermediate material 24 located close to the oxidizing atmosphere (external space 23) can be made smaller than the surface roughness of the intermediate material 24 located away from the oxidizing atmosphere (external space 23), that is, located closer to the support substrate 2 in a reducing atmosphere. In the embodiment, the surface roughness of the surface 245 is smaller than the surface roughness of the surface 241.

As a result, for example, even during high-temperature operation, chromium contained in the interconnector 4 can be made unlikely to be desorbed into the oxidizing atmosphere (external space 23). That is, by reducing the surface roughness of the surface 245 of the intermediate material 24, which is located near the oxidizing atmosphere and from which chromium is unlikely to be desorbed into the oxidizing atmosphere (external space 23), chromium can be made further unlikely to be desorbed into the oxidizing atmosphere. Thus, according to the present embodiment, the durability of the cell 1 can be improved, whereby the durability of the cell stack device 10 can be improved.

The surface roughness of the surface 245 located near the oxidizing atmosphere may be smaller than 8 µm to 30 µm, which is a typical surface roughness of an insulative oxide such as forsterite provided on a metal surface, for example. The surface roughness of the surface 241 may be equal to or larger than the typical surface roughness of such insulative oxide.

The surface roughness of the surface 242 located between the surface 241 and the surface 245 may be equal to the surface roughness of the surface 241 or may be equal to the surface roughness of the surface 245. The surface 242 may have an intermediate surface roughness between the surface roughness of the surface 241 and the surface roughness of the surface 245.

The sealing material 25 is bonded to the intermediate material 24, and depending on the operation environment, the fuel gas may leak from a gap generated by the sealing material 25 peeling off from the intermediate material 24, whereby the durability of the cell stack device 10 may be lowered.

The surface roughness of the surface 242 can be larger than the surface roughness of the surface 241. As a result, for example, the adhesiveness between the surface 242 of the intermediate material 24 and the sealing material 25 can be increased. Due to this, for example, the sealing material 25 is unlikely to peel off from the surface 242 side near the surface 245 exposed to the oxidizing atmosphere (external space 23), whereby the fuel gas leakage can be made unlikely to occur. Thus, according to the present embodiment, the durability of the cell stack device 10 may be enhanced. The sealing material 25 is also in contact with the surface 241. When the surface roughness of the surface 241 is large, the adhesiveness between the surface 241 and the sealing material 25 can be increased. The surface roughness of the surfaces 242 and 245 may be larger than the typical surface roughness of the above-described insulative oxide.

As illustrated in FIGs. 3B to 3F, the sealing material 25 or the adhesive 9 may be located between the intermediate material 24 and the solid electrolyte layer 6, between the constituent members of the cell 1, or the like. As illustrated in FIGs. 3G to 3J, a gap S may be present between the sealing material 25 and each constituent member of the cell 1. In this case as well, the durability of the cell stack device 10 may be enhanced as in FIG. 3A.

As illustrated in FIG. 3K and FIGs. 3L to 3S, the sealing material 25 or the adhesive 9 may be located between the intermediate material 24 and the solid electrolyte layer 6, between the constituent members of the cell 1, or the like. As illustrated in FIGs. 3T to 3Y, a gap S may be present between the sealing material 25 and each constituent member of the cell 1. In this case as well, the durability of the cell stack device 10 may be enhanced as in FIG. 3A.

In the embodiment described above, the durability of the cell 1 is enhanced by including the portions having different surface roughnesses at different positions of the intermediate material 24. However, the durability of the cell 1 may also be enhanced by including the portions having different thicknesses at different positions of the intermediate material 24.

FIG. 4 is a cross-sectional view illustrating another example of the electrochemical cell according to the first embodiment. As illustrated in FIG. 4, the intermediate material 24 may include a first portion P1 and a second portion P2. The first portion P1 is located between the surface 241 and the surface 243, and the second portion P2 is located between the surface 242 and the surface 244. The second portion P2 is close to the oxidizing atmosphere (external space 23). The first portion P1 is more separate from the oxidizing atmosphere (external space 23) than the second portion P2 and is close to the support substrate 2 in the reducing atmosphere.

As illustrated in FIG. 4, in the intermediate material 24, a thickness t2 as the average thickness of the second portion P2 may be larger than a thickness t1 as the average thickness of the first portion P1. As a result, for example, even during high-temperature operation, chromium contained in the interconnector 4 can be made unlikely to be desorbed into the oxidizing atmosphere (external space 23). Thus, according to the present configuration, the durability of the cell 1 can be improved, whereby the durability of the cell stack device 10 can be improved. The second portion P2 of the intermediate material 24 may have the thickness t1 of 30 µm or more, for example.

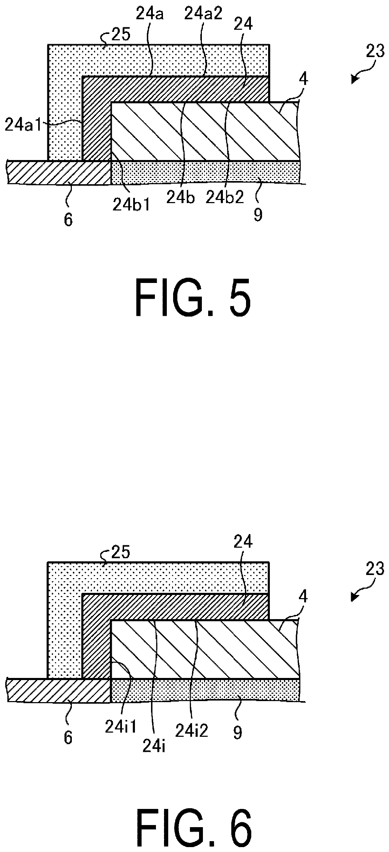

FIG. 5 is a cross-sectional view illustrating another example of the electrochemical cell according to the first embodiment. The intermediate material 24 may have different surface roughnesses between a first interface 24a facing the sealing material 25 and a second interface 24b facing the interconnector 4, thereby enhancing the durability of the cell 1.

Specifically, the surface roughness of the first interface 24a may be larger than the surface roughness of the second interface 24b. As a result, the adhesiveness between the intermediate material 24 and the sealing material 25 can be increased. With this, the sealing material 25 is unlikely to peel off from the intermediate material 24, and the fuel gas leakage can be made unlikely to occur. Thus, according to the present configuration, the durability of the cell 1 can be improved, whereby the durability of the cell stack device 10 can be improved.

As illustrated in FIG. 5, the first interface 24a includes interfaces 24a1 and 24a2, and the second interface 24b includes interfaces 24b1 and 24b2. The surface roughness of the first interface 24a may be, for example, an average value of the surface roughness of the interfaces 24a1 and 24a2. The surface roughness of the second interface 24b may be, for example, an average value of the surface roughness of the interfaces 24b1 and 24b2.

The sealing material 25 is considered to be easily peeled off from the interface 24a2 side of the intermediate material 24 as compared with the interface 24a1. The surface roughness of the interface 24a2 may be larger than the surface roughness of the interface 24b2. With this, the sealing material 25 is unlikely to peel off from the interface 24a2 side, and thus the fuel gas leakage can be made unlikely to occur. Therefore, since the durability of the cell 1 can be improved, the durability of the cell stack device 10 can be improved.

FIG. 6 is a cross-sectional view illustrating another example of the electrochemical cell according to the first embodiment. The durability of the cell 1 may be improved by adjusting the content rate of a specific metal element located at the boundary portion between the interconnector 4 and the intermediate material 24 in such a manner that the above content rate becomes different from the content rate of the metal element in the interconnector 4 or the intermediate material 24. The boundary portion between the interconnector 4 and the intermediate material 24 is a portion of the interconnector 4 and a portion of the intermediate material 24 located in the vicinity of the interface between the interconnector 4 and the intermediate material 24, and includes the interface between the interconnector 4 and the intermediate material 24.

To be specific, at least one element among Mn, Ti, Ca, and Al may be located in the vicinity of an interface 24i, which is a boundary portion between the interconnector 4 and the intermediate material 24. A first content rate that is a sum of content rates of Mn, Ti, Ca, and Al in the vicinity of the interface 24i may be greater than a second content rate that is a sum of content rates of Mn, Ti, Ca, and Al inside the interconnector 4 or inside the intermediate material 24. In this case, the inside of the interconnector 4 may be a portion of the interconnector 4 sufficiently distant from the interface 24i, for example, a portion located at an equal distance from the intermediate material 24 and the adhesive 9 or a portion closer to the adhesive 9 than the above-mentioned portion. The inside of the intermediate material 24 may be a portion of the intermediate material 24 sufficiently distant from the interface 24i, for example, a portion located at an equal distance from the interconnector 4 and the sealing material 25 or a portion closer to the sealing material 25 than the above-mentioned portion. The vicinity of the interface 24i may be, for example, a region at a distance of not greater than 300 nm from the interface 24i.

As a result, the adhesiveness between the interconnector 4 and the intermediate material 24 can be increased. Thus, the interconnector 4 and the intermediate material 24 are unlikely to peel off, thereby making the fuel gas leakage unlikely to occur. Therefore, since the durability of the cell 1 can be improved, the durability of the cell stack device 10 can be improved.

Note that the above-described specific element located in the vicinity of the interface 24i can be located as a simple substance, an alloy, or a metal oxide. The above-mentioned element may be located at any of the interconnector 4 side and the intermediate material 24 side or may be located across the interconnector 4 and the intermediate material 24. Such an element may be located throughout the interface 24i or may be located at only one of an interface 24i1 and an interface 24i2, for example.

### Module

A module according to the embodiment of the present disclosure using the cell stack device 10 described above will be described next with reference to FIG. 7. FIG. 7 is an exterior perspective view illustrating a module according to the first embodiment. FIG. 7 illustrates a state in which front and rear faces that are part of a container 101 are removed and the cell stack device 10 of the fuel cell housed in the above container is taken out rearward.

As illustrated in FIG. 7, a module 100 includes the container 101, and the cell stack device 10 housed in the container 101. The reformer 102 is disposed above the cell stack device 10.

The reformer 102 generates a fuel gas by reforming a raw fuel such as natural gas and kerosene and supplies the fuel gas to the cell 1. The raw fuel is supplied to the reformer 102 through a raw fuel supply pipe 103. Note that the reformer 102 may include a vaporizing unit 102a for vaporizing water and a reforming unit 102b. The reforming unit 102b includes a reforming catalyst (not illustrated) for reforming the raw fuel into a fuel gas. Such reformer 102 can perform steam reforming, which is a highly efficient reformation reaction.

The fuel gas generated by the reformer 102 is supplied to the gas-flow passages 2a (see FIG. 1A) of the cell 1 through the gas circulation pipe 20, the gas tank 16, and the support member 14.

In the module 100 having the configuration mentioned above, the temperature in the module 100 during normal power generation is about from 500°C to 1000°C due to combustion of gas and power generation by the cell 1.

As described above, the module 100 is configured by housing the cell stack device 10 having high durability, so that the module 100 having high durability can be obtained.

### Module Housing Device

FIG. 8 is an exploded perspective view illustrating an example of a module housing device according to the first embodiment. A module housing device 110 according to the present embodiment includes an external case 111, the module 100 illustrated in FIG. 7, and an auxiliary device (not illustrated). The auxiliary device operates the module 100. The module 100 and the auxiliary device are housed in the external case 111. Note that in FIG. 8, the configuration is partially omitted.

The external case 111 of the module housing device 110 illustrated in FIG. 8 includes a support 112 and an external plate 113. A dividing plate 114 vertically partitions the interior of the external case 111. The space above the dividing plate 114 in the external case 111 is a module housing chamber 115 for housing the module 100. The space below the dividing plate 114 in the external case 111 is an auxiliary device housing chamber 116 for housing the auxiliary device configured to operate the module 100. Note that in FIG. 8, the auxiliary device housed in the auxiliary device housing chamber 116 is omitted.

The dividing plate 114 includes an air circulation hole 117 for causing air in the auxiliary device housing chamber 116 to flow into the module housing chamber 115 side. The external plate 113 constituting the module housing chamber 115 includes an exhaust hole 118 for discharging air inside the module housing chamber 115.

In the module housing device 110, the module housing device 110 having high durability can be obtained by providing the module 100 having high durability in the module housing chamber 115 as described above.

### Second Embodiment

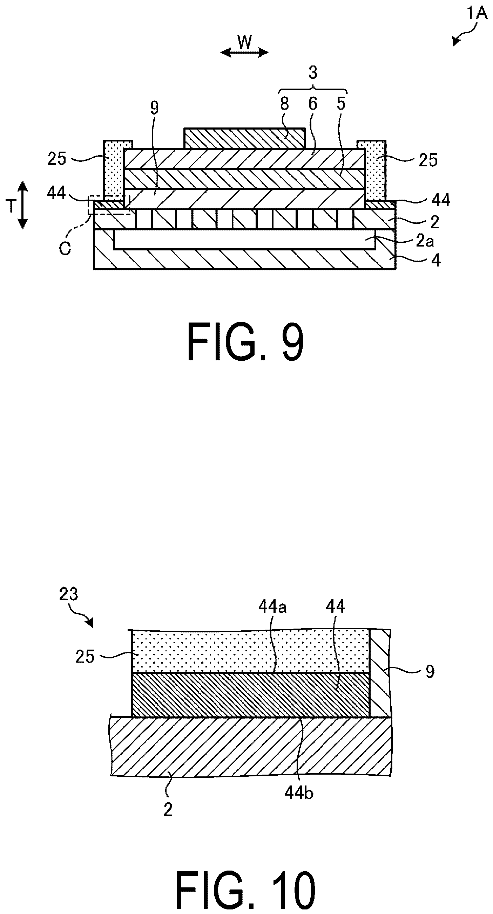

FIG. 9 is a cross-sectional view illustrating an example of an electrochemical cell according to a second embodiment. A cell 1A includes an element portion 3, a support substrate 2, an adhesive 9, an interconnector 4, a sealing material 25, and an intermediate material 44.

The support substrate 2 is a flat metal plate having one surface and the other surface facing the one surface. The support substrate 2 includes a gas-flow passage 2a at the one surface side. The element portion 3 is located at the other surface side of the support substrate 2. The support substrate 2 includes a through hole or a narrow hole at a portion in contact with the element portion 3 and allows the gas to flow between the gas-flow passage 2a and the element portion 3. The material of the metal plate may be the same as or similar to that of the interconnector 4 containing chromium. The support substrate 2 is an example of a metal member in the present embodiment.

The interconnector 4 is provided at the one surface side of the support substrate 2, where the gas-flow passage 2a is located.

The sealing material 25 is located on end surfaces of the element portion 3 and the adhesive 9. The sealing material 25 fixes the element portion 3 and the support substrate 2 and makes the leakage of the fuel gas unlikely to occur. The sealing material 25 may be located away from an air electrode 8.

The intermediate material 44 is located between the support substrate 2 and the sealing material 25. The intermediate material 44 increases the adhesiveness between the sealing material 25 and the support substrate 2, thereby making it possible to enhance the durability of the cell 1A. The material of the intermediate material 44 may be the same as the material of the intermediate material 24 according to the embodiment discussed above.

### Bonding between Metal Member and Sealing Material

FIG. 10 is an enlarged cross-sectional view of a region C depicted in FIG. 9. As illustrated in FIG. 10, the sealing material 25 is bonded to the support substrate 2 with the intermediate material 44 interposed therebetween.

The intermediate material 44 has a surface 441 in contact with the sealing material 25, a surface 442 in contact with the support substrate 2, and a surface 443 in contact with the adhesive 9. The intermediate material 44 has a surface 444 located on the side of an external space 23.

As described above, the support substrate 2 contains chromium. For example, when chromium contained in the support substrate 2 is desorbed into the oxidizing atmosphere (external space 23), the durability of the support substrate 2 may be reduced.

Thus, in the present embodiment, the surface roughness of the intermediate material 44 located close to the oxidizing atmosphere (external space 23) can be made smaller than the surface roughness of the intermediate material 44 located away from the oxidizing atmosphere (external space 23), that is, located closer to a fuel electrode 5 in the reducing atmosphere or to the adhesive 9. In the embodiment, the surface roughness of the surface 444 is smaller than the surface roughness of the surface 443.

As a result, for example, even during high-temperature operation, chromium contained in the support substrate 2 can be made unlikely to be desorbed into the oxidizing atmosphere (external space 23). Thus, according to the present embodiment, the durability of the cell 1A can be improved, whereby the durability of a cell stack device 10 can be improved.

The surface roughness of the surface 441 located between the surface 444 and the surface 443 may be the same as the surface roughness of the surface 444 or may be the same as the surface roughness of the surface 443. The surface 441 may have an intermediate surface roughness between the surface roughness of the surface 444 and the surface roughness of the surface 443.

The sealing material 25 is bonded to the intermediate material 44, and depending on the operation environment, the fuel gas may leak from a gap generated by the sealing material 25 peeling off from the intermediate material 44, whereby the durability of the cell stack device 10 may be lowered.

The surface roughness of the surface 441 can be larger than the surface roughness of the surface 444. As a result, for example, the adhesiveness between the surface 441 of the intermediate material 44 and the sealing material 25 can be increased. Due to this, for example, the sealing material 25 is unlikely to peel off from the surface 441 located at the surface 444 side exposed to the oxidizing atmosphere (external space 23), whereby the fuel gas leakage can be made unlikely to occur. Thus, according to the present embodiment, the durability of the cell stack device 10 may be enhanced.

In the embodiment described above, the durability of the cell 1A is enhanced by including the portions having different surface roughnesses at different positions of the intermediate material 44. However, the durability of the cell 1A may also be enhanced by including the portions having different thicknesses at different positions of the intermediate material 44.

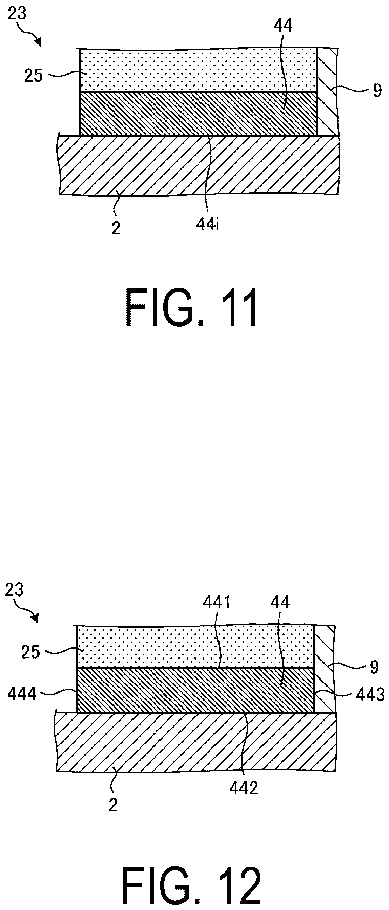

FIG. 11 is a cross-sectional view illustrating another example of the electrochemical cell according to the second embodiment. The intermediate material 44 depicted in FIG. 11 has the surface 443 as a first portion and the surface 444 as a second portion. The surface 444 is a portion close to the oxidizing atmosphere (external space 23). The surface 443 is more separated from the oxidizing atmosphere (external space 23) than the surface 444 and is a portion close to the support substrate 2 in the reducing atmosphere.

As illustrated in FIG. 11, in the intermediate material 44, a thickness t22 as the average thickness of the surface 444 may be larger than a thickness t21 as the average thickness of the surface 443. As a result, for example, even during high-temperature operation, chromium contained in the support substrate 2 can be made unlikely to be desorbed into the oxidizing atmosphere (external space 23). Thus, according to the present configuration, the durability of the cell 1A can be improved, whereby the durability of the cell stack device 10 can be improved.

FIG. 12 is a cross-sectional view illustrating another example of the electrochemical cell according to the second embodiment. The intermediate material 44 may have different surface roughnesses between a first interface 44a of the intermediate material 44 facing the sealing material 25 and a second interface 44b of the intermediate material 44 facing the support substrate 2, thereby enhancing the durability of the cell 1A.

Specifically, the surface roughness of the first interface 44a may be larger than the surface roughness of the second interface 44b. As a result, the adhesiveness between the intermediate material 44 and the sealing material 25 can be increased. With this, the sealing material 25 is unlikely to peel off from the intermediate material 44, and the fuel gas leakage can be made unlikely to occur. Thus, according to the present configuration, the durability of the cell 1A can be improved, whereby the durability of the cell stack device 10 can be improved.

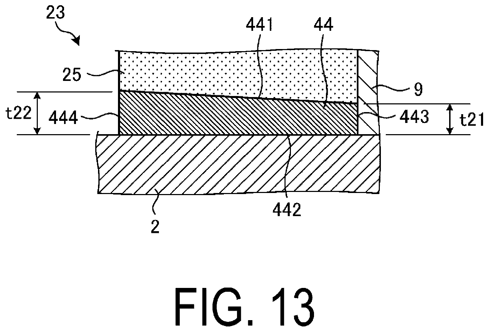

FIG. 13 is a cross-sectional view illustrating another example of the electrochemical cell according to the second embodiment. The durability of a cell 1B may be improved by adjusting the content rate of a specific metal element located at a boundary portion between the support substrate 2 and the intermediate material 44 in such a manner that the above content rate becomes different from the content rate of a metal element in the support substrate 2 or the intermediate material 44.

To be specific, at least one element among Mn, Ti, Ca, and Al may be located in the vicinity of an interface 44i, which is the boundary portion between the support substrate 2 and the intermediate material 44. A first content rate that is a sum of content rates of Mn, Ti, Ca, and Al in the vicinity of the interface 44i may be greater than a second content rate that is a sum of content rates of Mn, Ti, Ca, and Al inside the support substrate 2 or inside the intermediate material 44.

As a result, the adhesiveness between the support substrate 2 and the intermediate material 44 can be increased. Thus, the support substrate 2 and the intermediate material 44 are unlikely to peel off, thereby making the fuel gas leakage unlikely to occur. Therefore, since the durability of the cell 1A can be improved, the durability of the cell stack device 10 can be improved.

Note that the above-described specific element located in the vicinity of the interface 44i can be located as a simple substance, an alloy, or a metal oxide. The above-mentioned element may be located at any of the support substrate 2 side and the intermediate material 44 side or may be located across the support substrate 2 and the intermediate material 44. Such an element may be located throughout the interface 44i or may be located at only part of the interface 44i, for example.

### Evaluation Method

Here, the thickness of each portion of the intermediate materials 24 and 44 described above is calculated by image analysis of a cross-section perpendicular to the surface of each portion. First, each of the intermediate materials 24 and 44, the interconnector 4, the support substrate 2, and the sealing material 25 are cut out and embedded in a resin. Then, a cross-section perpendicular to a surface of each portion is polished using abrasive grains, a lapping film (approximately #8000), or the like to obtain a cross-section in a mirror state. An image of the obtained cross-section is captured using a scanning electron microscope (SEM), an optical microscope, or the like, and then the thickness of each portion can be measured by image analysis of the captured image. The thickness of each portion of the intermediate materials 24 and 44 may be, for example, an average value of the thicknesses measured at any three points of each portion.

The magnitude of the surface roughness of each surface of the intermediate materials 24 and 44 described above can be determined based on an arithmetic mean roughness Ra prescribed in JIS B0633;2001. The arithmetic mean roughness Ra can be calculated by image analysis of a cross-section perpendicular to each surface whose surface roughness is to be measured in the same manner as in the case of measuring the thickness of each portion. The surface roughness of each surface of the intermediate materials 24 and 44 may be, for example, an average value of the surface roughness measured at any three points of each surface.

The content rates of Mn, Ti, Ca, and Al in each portion of the intermediate materials 24 and 44, the interconnector 4, the support substrate 2, and the sealing material 25 can be confirmed, for example, by cutting or scraping each portion from the cell 1 or 1A and analyzing it by elemental analysis such as ICP emission spectroscopy. Whether a specific element is present in the boundary portion of each member can be determined by elemental analysis of a cross-section including the boundary portion, for example, by mapping the specific element, using a scanning electron microscope (SEM), a transmission electron microscope (TEM), a scanning transmission electron microscope (STEM) or the like, and using an electron probe microanalyzer (EPMA), wavelength dispersive X-ray spectroscopy (WDS), energy dispersive X-ray spectroscopy (EDS), or the like. The content rate of Mn, Ti, Ca, and Al in the respective members and the boundary portion of the respective members can be calculated by elemental analysis of a cross-section of each of the intermediate materials 24 and 44, the interconnector 4, the support substrate 2, and the sealing material 25, using an electron probe microanalyzer (EPMA), wavelength dispersive X-ray spectroscopy (WDS), energy dispersive X-ray spectroscopy (EDS), or the like.

### Thickness of Intermediate Material

The thickness of each of the intermediate materials 24 and 44 calculated as described above may be, for example, 2 µm to 400 µm when the thicknesses of the entire intermediate materials 24 and 44 are averaged.

### Surface Roughness of Each Surface

The surface roughness (arithmetic mean roughness Ra) of each surface of the intermediate materials 24 and 44 calculated as described above may be, for example, 0.1 µm to 30 µm. The surface roughness (arithmetic mean roughness Ra) of some surfaces among the surfaces of the intermediate materials 24 and 44 may be, for example, in a range from 0.1 µm to 30 µm.

### Content Rate of Mn, Ti, Ca, and Al

The content rates of Mn, Ti, Ca, and Al in each portion of the intermediate materials 24 and 44, the interconnector 4, the support substrate 2, and the sealing material 25 calculated as described above can be, for example, in a range from 0.01 mass% to 10 mass%. The content rates of Mn, Ti, Ca, and Al in the intermediate materials 24 and 44, the interconnector 4, the support substrate 2, and the boundary portion between the intermediate materials 24 and 44 and the interconnector 4 or the support substrate 2 can be respectively, for example, 0.01 mass% to 10 mass% (intermediate materials 24 and 44), 0.01 mass% to 10 mass% (interconnector 4 and support substrate 2), and 0.1 mass% to 30 mass% (boundary portion).

### Manufacturing Method

The intermediate materials 24 and 44 according to the embodiment can be located, for example, by a method such as a thermal spraying method, a vaporizing method, an electrodeposition method, or a sputtering method. For example, the surface of the interconnector 4 or the support substrate 2 may be coated with a coating material, and thereafter the coating material may be fired to form the intermediate materials 24 and 44.

Polishing treatment may be performed in such a manner that the surface roughness of each surface of the intermediate materials 24 and 44 and/or the thickness of each portion of the intermediate materials 24 and 44 has a desired value, for example. Desired values may be obtained by changing various conditions at the time of forming the intermediate materials 24 and 44 described above. Other surfaces can also be formed by appropriately combining the above-described manufacturing methods of the intermediate materials 24 and 44 and known methods.

### Other Embodiments

In the embodiments described above, a fuel cell, a fuel cell stack device, a fuel cell module, and a fuel cell device have been illustrated as examples of the "electrochemical cell", the "electrochemical cell device", the "module", and the "module housing device"; however, they may be an electrolytic cell, an electrolytic cell stack device, an electrolytic module, and an electrolytic device, respectively, as other examples. The electrolytic cell includes a first electrode and a second electrode and decomposes water vapor into hydrogen and oxygen or decomposes carbon dioxide into carbon monoxide and oxygen by supplying electric power. Although an oxide ion conductor or a hydrogen ion conductor is shown as an example of the electrolyte material of the electrochemical cell in the above embodiment, the electrolyte material may be a hydroxide ion conductor. The durability of the electrolytic cell, electrolytic cell stack device, electrolytic module, and electrolytic device discussed above can also be improved.

While the present disclosure has been described in detail, the present disclosure is not limited to the aforementioned embodiments, and various changes, improvements, and the like can be made without departing from the gist of the present disclosure.

As described above, the electrochemical cell (for example, cell 1) according to the embodiment includes a porous portion (for example, support substrate 2), a metal member (for example, interconnector 4), a sealing material (for example, sealing material 25), and an intermediate material (for example, intermediate material 24). The porous portion is electrically conductive. The metal member contains chromium. The sealing material is located on the porous portion and on the metal member. The intermediate material is located between the metal member and the sealing material. The intermediate material includes two or more portions having different surface roughnesses or different thicknesses at different positions. This can enhance the durability of the electrochemical cell.

The electrochemical cell (for example, cell 1) according to the embodiment includes a porous portion (for example, support substrate 2), a metal member (for example, interconnector 4), a sealing material (for example, sealing material 25), and an intermediate material (for example, intermediate material 24). The porous portion is electrically conductive. The metal member contains chromium. The sealing material is located on the porous portion and on the metal member. The intermediate material is located between the metal member and the sealing material. The surface roughness of a first interface of the intermediate material facing the sealing material is different from the surface roughness of a second interface of the intermediate material facing the metal member. This can enhance the durability of the electrochemical cell.

The electrochemical cell (for example, cell 1) according to the embodiment includes a porous portion (for example, support substrate 2), a metal member (for example, interconnector 4), a sealing material (for example, sealing material 25), and an intermediate material (for example, intermediate material 24). The porous portion is electrically conductive. The metal member contains chromium. The sealing material is located on the porous portion and on the metal member. The intermediate material is located between the metal member and the sealing material. At least one element selected from the group consisting of Mn, Ti, Ca, and Al is located at a boundary portion between the metal member and the intermediate material. A first content rate that is a sum of content rates of Mn, Ti, Ca, and Al in the boundary portion is different from a second content rate that is a sum of content rates of Mn, Ti, Ca, and Al inside the metal member or inside the intermediate material. This can enhance the durability of the electrochemical cell.

The electrochemical cell device (for example, cell stack device 10) of the present disclosure includes a cell stack including the electrochemical cell described above. This makes it possible to obtain the electrochemical cell device having high durability.

The module 100 of the present disclosure includes the electrochemical cell device described above and the container 101 for housing the electrochemical cell device. Thus, the module 100 having high durability can be obtained.

The module housing device 110 of the present disclosure includes the module 100 described above, an auxiliary device configured to operate the module 100, and an external case for housing the module 100 and the auxiliary device. Thus, the module housing device 110 having high durability can be obtained.

Note that the embodiments disclosed herein are exemplary in all respects and not restrictive. The aforementioned embodiments can be embodied in a variety of forms. The aforementioned embodiments may be omitted, replaced, or changed in various forms without departing from the scope of the appended claims and the purpose thereof.

### REFERENCE SIGNS

1, 1A Cell
4 Interconnector
10 Cell stack device
11 Cell stack
12 Fixing member
13 Fixing material
14 Support member
15 Support body
16 Gas tank
17 End current collection member
18 Electrically conductive member
23 External space
24, 44 Intermediate material
25 Sealing material
100 Module
110 Module housing device

## Claims

1. An electrochemical cell comprising:
a porous portion that is electrically conductive;
a metal member containing chromium;
a sealing material located on the porous portion and on the metal member; and
an intermediate material:
located between the metal member and the sealing material;
comprising two or more portions having different surface roughnesses or different thicknesses at different positions.

2. The electrochemical cell according to claim 1, wherein the intermediate material is an insulative oxide.

3. The electrochemical cell according to claim 1 or 2, wherein
the intermediate material further comprises a first surface close to a reducing atmosphere and a second surface closer to an oxidizing atmosphere than the first surface, and
a surface roughness of the second surface is smaller than a surface roughness of the first surface.

4. The electrochemical cell according to claim 1 or 2, wherein
the intermediate material further comprises a first portion close to a reducing atmosphere and a second portion closer to an oxidizing atmosphere than the first portion, and
a thickness of the second portion is larger than a thickness of the first portion.

5. An electrochemical cell comprising:
a porous portion that is electrically conductive;
a metal member containing chromium;
a sealing material located on the porous portion and on the metal member; and
an intermediate material:
located between the metal member and the sealing material; and comprising:
a first interface facing the sealing material; and
a second interface facing the metal member, the first interface different in surface roughness from the second interface.

6. The electrochemical cell according to claim 5, wherein
the first interface is larger in surface roughness than the second interface.

7. An electrochemical cell comprising:
a porous portion that is electrically conductive;
a metal member containing chromium;
a sealing material located on the porous portion and on the metal member; and
an intermediate material located between the metal member and the sealing material, wherein
at least one element selected from the group consisting of Mn, Ti, Ca, and Al is in a boundary portion between the metal member and the intermediate material, and
a first content rate that is content rate of Mn, Ti, Ca, and Al in the boundary portion is different from a second content rate that is a sum of content rate of Mn, Ti, Ca, and Al inside the metal member or inside the intermediate material.

8. The electrochemical cell according to claim 7, wherein the first content rate is greater than the second content rate.

9. An electrochemical cell device comprising a cell stack comprising the electrochemical cell according to any one of claims 1 to 8.

10. A module comprising:
the electrochemical cell device according to claim 9; and
a container housing the electrochemical cell device.

11. A module housing device comprising:
the module according to claim 10;
an auxiliary device configured to operate the module; and
an external case housing the module and the auxiliary device.
